# EUROPEAN PATENT APPLICATION

(11) **EP 0 543 036 A1**
(43) Date of publication of application: **26.05.1993**
(21) Application number: 91119722.6
(22) Date of filing: 19.11.1991
(51) Int. Cl.: G11B 3/78, G11B 3/00

(54) **phonographic reproduction apparatus with means for selecting the groove of the record to be reproduced, particularly for toys and the like**

(71) Applicant: MINIPHON S.P.A., I-20090 Trezzano Sul Naviglio (Prov. Milano) (IT)
(72) Inventor: Biasi, Adriano, I-20080 Zibido San Giacomo, (Milano) (IT)
(74) Representative: Modiano, Guido, Dr.-Ing.

(57) **Abstract**

The phonographic reproduction apparatus with means for selecting the groove of the record to be reproduced comprises, inside a box-like container, a turntable (4) which supports a record (10) having a plurality of concentric grooves and a pickup arm (15) on which an elastically pushed membrane (20) acts. Furthermore the apparatus comprises at least one selection pin (30) which can be actuated in a preselectable circumferential position from the outside of the box-like container and interacts with an actuator (40) which acts by contact on the membrane to space it from the record. The selection pin is provided with removable retention means for retaining it in actuated position until it engages a radial protrusion (50) of the turntable, with the consequent starting of sound reproduction.

## Description

The present invention relates to a phonographic reproduction apparatus with means for selecting the groove of the record the be reproduced, particularly for toys and the like.

As is known, phonographic reproduction apparatuses are currently known which can be used for toys in general and have a record provided with a plurality of concentric grooves whose beginnings, for each groove, are uniformly distributed circumferentially so as to reproduce different messages according to the selected groove.

In order to perform this selection, apparatuses are currently known having a plurality of pins which are distributed circumferentially around the turntable and are slidingly supported by a guiding plate or directly by the container of the turntable.

In order to operate, one acts on the preselected pin, which raises the speaker membrane, thus allowing the pickup arm to move to the beginning of the record, i.e. at the periphery of said record.

The turntable is provided with a protrusion which strikes the pin which has been selected, and in practice positions the record with respect to the pickup arm, so that reproduction of the record starts in the groove which has thus been preselected.

In order to keep the preselected pin in pressed or actuated position, a complicated additional element is currently used which is substantially constituted by a wheel mounted coaxially to the rotation shaft of the turntable and provided with a plurality of inclined surfaces and arms for the removable retention of said pins.

Said intermediate wheel is also provided with a protrusion which interacts by contact with the sound reproduction membrane which is mounted inside the box-like container of the turntable.

This embodiment is considerably complicated from a constructive point of view and requires a large number of intermediate elements in order to retain the pin in pressed position and to actuate the sound reproduction membrane.

In order to eliminate these disadvantages, the same Applicant devised, in Italian patent application no. 20823 A/89 filed June 8, 1989, a solution wherein the activation pins, which could be accessed from the outside of the box-like container, were provided with removable retention means which retained them in actuated position until they engaged a radial protrusion of the turntable which was capable of deactivating the selected pin with the beginning of phonographic reproduction at the selected groove of said plurality of grooves.

This solution, despite being valid from many points of view, has been found to be susceptible to improvements, especially as regards the constructive aspects and the need to use a plurality of activation pins provided with retention means.

Said solution did not in fact permit an easy application to phonographic reproduction apparatuses having a large number of preselectable grooves.

The aim of the invention is to solve the above described drawbacks by providing a phonographic reproduction apparatus which allows to perform a correct selection even in the case of a large number of grooves of the record to be selected, without however having to use a corresponding large number of selection pins with retention means.

Within the scope of the above aim, a particular object of the invention is to provide a phonographic reproduction apparatus which has a simplified structure and a limited number of component elements, although allowing to select a large number of grooves on the record.

Another object of the present invention is to provide a phonographic reproduction apparatus in which a very high precision of intervention is always obtained, thus allowing to achieve the greatest assurances of reliability and safety in use.

Not least object of the present invention is to provide a phonographic reproduction apparatus which, by virtue of its peculiar constructive characteristics, is capable of giving the greatest assurances of reliability and safety in use.

Not least object of the present invention is to provide a phonographic reproduction apparatus which can be easily obtained starting from commonly commercially available elements and materials and is furthermore competitive from a merely economical point of view.

This aim, these objects and others which will become apparent hereinafter are achieved by a phonographic reproduction apparatus with means for selecting the groove of the record to be reproduced, particularly for toys and the like, which comprises, inside a box-like container, a turntable actuated by motor means for its rotation and supporting a record which has a plurality of concentric grooves with circumferentially uniformly distributed beginnings, a pickup arm acting on said record, driving the startup and stopping of said motor means and being operatively associable with a speaker membrane which can move toward and away from said record, characterized in that it comprises at least one selection pin which can be actuated, outside said box-like container, in a preselectable circumferential position and interacts with at least one actuator which acts by contact on said membrane to space it from said record, said at least one selection pin being provided with removable retention means for retaining it in actuated position until it engages a radial protrusion of said turntable which is suitable for deactivating the selected pin with the beginning of phonographic reproduction at the selected groove of said plurality of grooves.

Further characteristics and advantages will become apparent from the description of a preferred but not exclusive embodiment of a phonographic reproduction apparatus, according to the invention, illustrated only by way of non-limitative example in the accompanying drawings, wherein:
figure 1 is a schematic partially sectional view of the phonographic reproduction apparatus in inactive position;
figure 2 is a partially cutout plan view of the apparatus;
figure 3 is a plan view of the position of the actuation pins with respect to the turntable;
figure 4 is an end view of the phonographic reproduction apparatus during the reproduction of a record;
figure 5 is a lateral partially sectional view of the phonographic reproduction apparatus during the reproduction step;
figures 6, 7 and 8 are successive views of the selection pin respectively in the actuated position, during the release step and in the deactivated position;
figure 9 is a schematic plan view of a different embodiment of the actuator;
figures 10 and 11 are views of the actuation element in two different actuation positions during the activated step which spaces the membrane from the turntable.

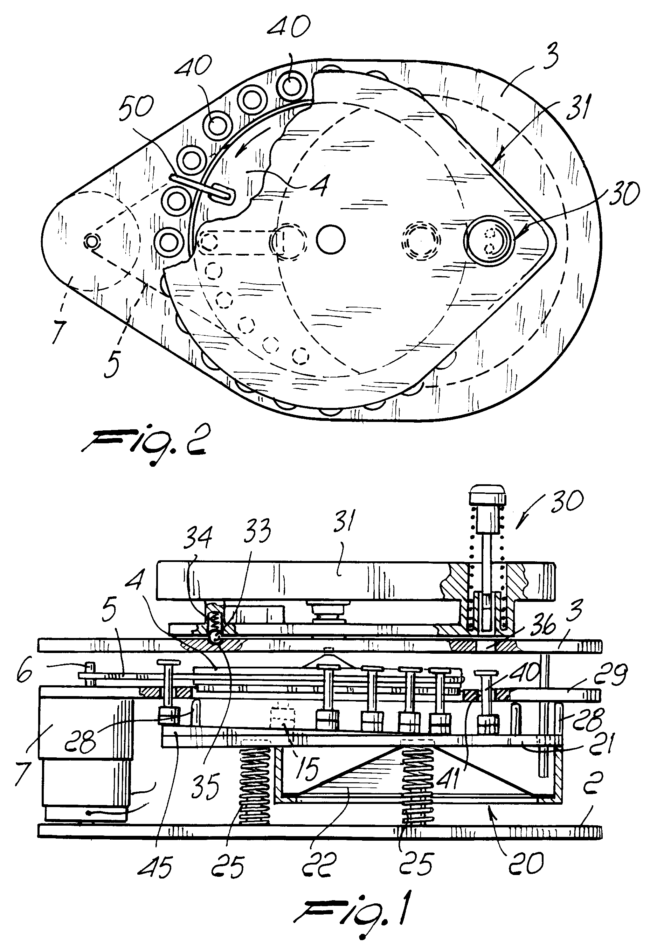

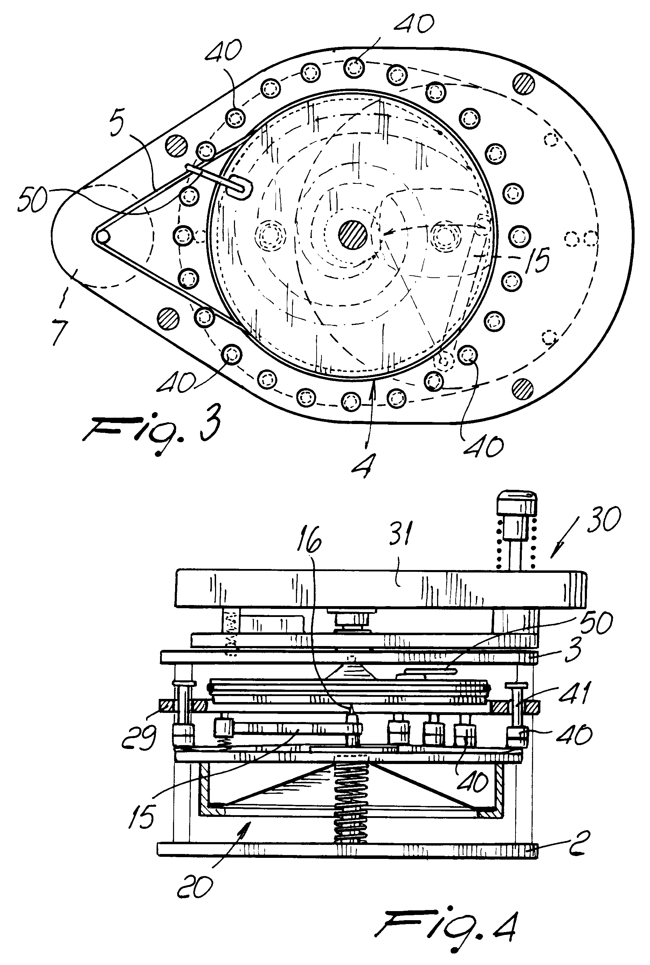

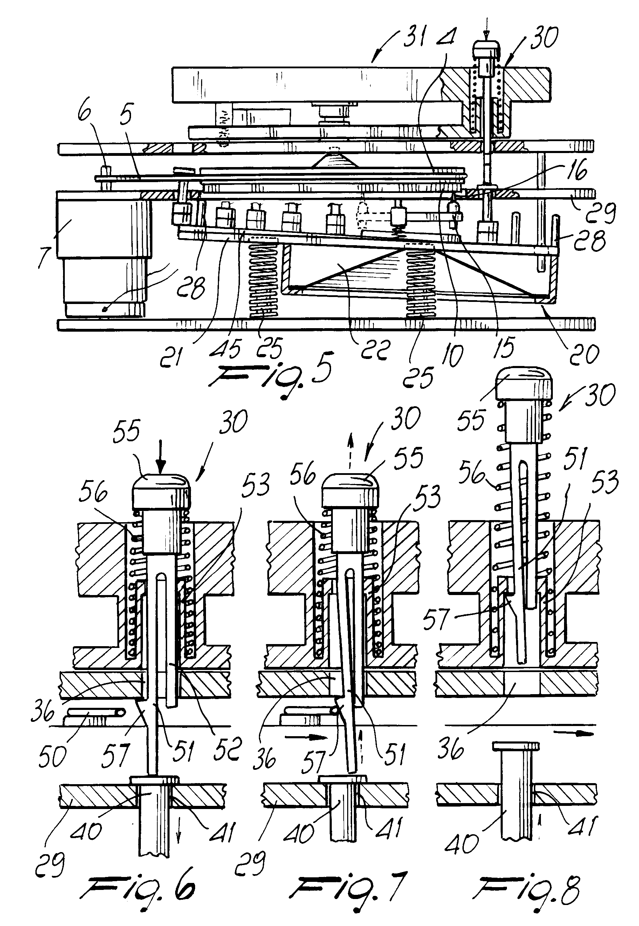

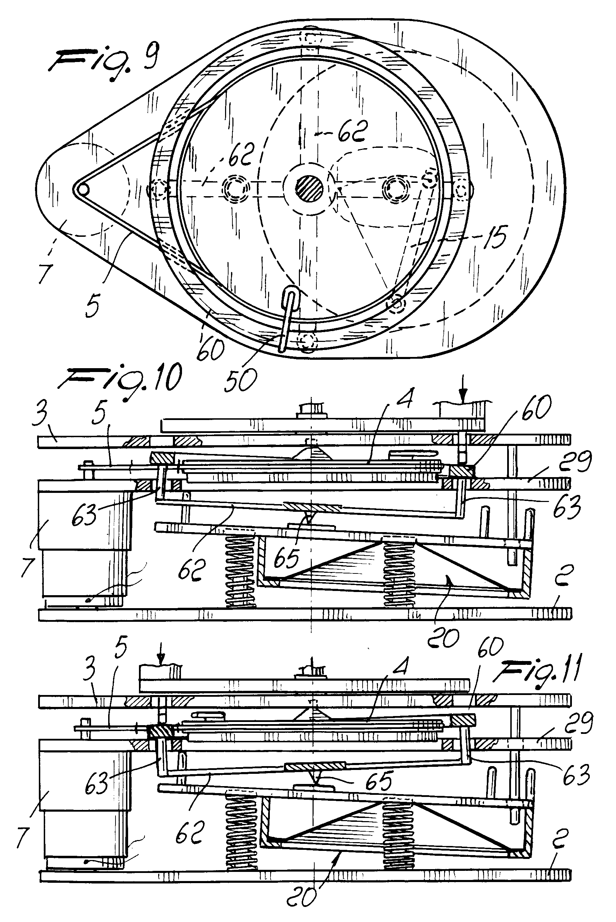

With reference to the above figures, and in particular to figures 1 to 8, the phonographic reproduction apparatus with means for selecting the groove of the record to be reproduced, particularly for toys and the like, according to the invention, comprises a box-like container of which a lower plate 2 and an upper plate 3 are illustrated in the drawings.

A turntable 4 is rotatably supported inside the box-like container and is perimetrically provided with the conventional annular groove wherein a belt 5 engages which is coupled, in order to draw rotary motion, to a shaft 6 of an electric motor 7 which can be supplied by means of a battery or the like.

The turntable 4 supports a record 10 of the type which has a plurality of concentric grooves whose beginnings are uniformly distributed along the circumference of the record.

The record at issue is a record with a plurality of grooves, for example twenty-four grooves, but obviously the record may have any number of grooves deemed appropriate.

A pickup arm 15 acts on the record and oscillates in a per se known manner about an axis which is parallel to the rotation axis of the turntable 4 so as to move the pickup 16 to affect the record from its periphery to its central region.

The pickup arm drives the starting and stopping of the motor 7 and, more precisely, it interrupts the operation of the motor 6 when the arm is toward the center of the record, i.e. at the end of the reproduction in the groove, whereas it activates the actuation of the motor when the arm is at the periphery of said record.

A speaker membrane, generally designated by the reference numeral 20, acts on the pickup arm 15 and is provided with a supporting plate 21 inside which there is a reproduction cone 22; the membrane 20 furthermore has, in a per se known manner, a central part which is in contact with the pickup arm. The membrane is elastically pressed by springs 25 which act between the lower plate 2 and said membrane.

The membrane can oscillate with respect to the axis of the turntable by means of fulcrum pivots, designated by 28, which extend from said membrane and abut on an intermediate plate 29 which also acts as retention element for the motor 7.

A feature of the invention is constituted by the fact that there is a selection pin, generally designated by the reference numeral 30, slidingly supported by a selection body 31 which can rotate about an axis which substantially coincides with the axis of the turntable and is provided with discrete positioning means constituted by a ball 33 which is pushed by a spring 34 so as to engage recesses 35 defined on the outer face of the upper plate 3.

The upper plate 3 is furthermore provided with a plurality of through holes 36 which are numerically equivalent to the grooves provided on the record.

By means of the discrete rotation of the selection body 31, the selection pin 30 is available at the preselected through hole 36 so as to allow to preselect the groove of the record to be reproduced.

An actuator is provided inside the box-like container at the through holes 36 and is constituted, in the example illustrated in figures 1 to 8, by a plurality of actuation pins 40, which are accommodated in guiding holes 41 defined by the intermediate plate 15 and engage the supporting frame of the membrane 20.

Advantageously, the plate 21 has, in the region of contact with the actuation pins 41, a cam-shaped profile 45 permitting to provide an oscillating movement of the membrane which is always equidistant from the pickup arm 15 regardless of the pin which is actuated.

The selection pin 30, as more clearly illustrated in figures 6 and 7, is provided with removable retention means for retaining it in actuated position until it engages a radial protrusion 50 of the turntable; said protrusion is capable of deactivating the selected pin, i.e. of returning it to the initial position in which it does not engage the actuation pins, consequently starting phonographic reproduction.

Each selection pin 30 is provided with a locking arm 51 which is flanked by a guiding arm 52. The arms 51 and 52 are slidingly accommodated in a guiding bush 53 defined by the selection body and can be inserted, upon the activation of the pin 30, in the selected through hole 36.

The pin 30 has an enlarged head 55 whereon elastic means abut which are constituted by a spring 56 which tends to move said pin into the non-actuation position.

The locking arm 51 is provided with a locking tooth 57 which is capable of removably engaging the inner edge of the through hole 36, as schematically illustrated in figure 7.

When the radial protrusion 50 provided on the turntable 4 engages the locking arm 51 by contact, said arm flexes elastically, disengaging the tooth 57 from the edge of the hole 36, so that the pin 30 is deactivated (figure 8) and consequently the membrane 20, which is no longer retained in spaced position by the actuation of the related actuation pin, returns into contact with the pickup arm 15, consequently starting the reproduction of the selected groove on the record.

The holes 36 are arranged circumferentially on the box-like container, so that in practice each hole 36 is matched by a certain groove defined on the record 10.

Figures 9 and 10 illustrate a conceptually similar embodiment, with the difference that the actuation pins 41, which must be numerically equal to the grooves, are replaced by an actuation ring 60 which is arranged around the turntable in a region comprised between the intermediate plate 25 and the upper plate 3 and is connected, by means of spoke-like elements 62 supported by posts 63, to an actuation pivot 65 which acts on the membrane 20 substantially always at the same point, regardless of the position in which the selection pin 30 is actuated, so that the membrane always has the same movement in any actuation position, as shown in figures 10 and 11.

In this case it is therefore not necessary to provide a cam-like shaping of the membrane surface, since the actuation pin is actuated always substantially at the same point.

In practical use, once the selection pin 30 has been positioned at the selected hole, which as mentioned corresponds to a preset groove of the record, pressure is exerted on the pin 30 so that its end acts against an actuation pin or optionally against the actuation ring so that the membrane 20 spaces from the turntable with an oscillation which occurs about one of the pivots which abut against the intermediate plate.

In these conditions, the pickup arm, which is no longer retained in the record central position by the membrane, elastically returns to the beginning of the record and starts the actuation of the motor 7, which rotates the turntable.

The rotation of the turntable moves the protrusion 50 so that it interacts with the locking arm 51 of the selection pin 30, which was in activated position for the engagement of the tooth 57 with the edge of the hole 36.

The engagement of the protrusion 50 with the arm 51 causes the tooth 57 to disengage from the edge 36 and to be elastically pushed into its extracted position.

In these conditions, the related actuation pin, or optionally the actuation ring in the version illustrated in figures 9 to 11, no longer retains the membrane in the spaced position and re-engages the pickup arm, which is pressed onto the record at the preset groove, so that phonographic reproduction of the selected groove begins.

Reproduction continues until the pickup arm arrives proximate to the center of the record, where the motor stops and reproduction consequently ends, keeping the pickup arm in the central position, as schematically illustrated in broken lines in figure 1.

The apparatus is thus ready for a subsequent activation, repeating the above described cycle, when the pin 30 is actuated in any one of the circumferential positions constituted by the through holes 36.

From what has been described above it can thus be seen that the invention achieves the intended aim and objects, and in particular the fact is stressed that a very simple structural solution is adopted, since there is a single selection element which must be provided with the removable retention means, and an actuator which in practice transmits the motion to the membrane is used; said actuator can be constituted by the plurality of actuation pins 41 or optionally by the single ring 60, which functionally perform the spacing of the membrane by oscillation, which in practice uses as fulcrum the point of abutment between the pins which protrude from the membrane and the intermediate plate.

The invention thus conceived is susceptible to numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Phonographic reproduction apparatus with means for selecting the groove of the record to be reproduced, particularly for toys and the like, comprising, inside a box-like container, a turntable actuated by motor means for its rotation and supporting a record which has a plurality of concentric grooves with circumferentially uniformly distributed beginnings, a pickup arm acting on said record, driving the startup and stopping of said motor means and being operatively associable with a speaker membrane which can move toward and away from said record, characterized in that it comprises at least one selection pin which can be actuated, outside said box-like container, in a preselectable circumferential position and interacts with at least one actuator which acts by contact on said membrane to space it from said record, said at least one selection pin being provided with removable retention means for retaining it in actuated position until it engages a radial protrusion of said turntable which is suitable for deactivating the selected pin with the beginning of phonographic reproduction at the selected groove of said plurality of grooves.

2. Phonographic reproduction apparatus according to claim 1, characterized in that said speaker membrane comprises a supporting plate inside which the reproduction cone is arranged, said plate being centrally provided with a portion suitable for making contact with said pickup arm, said membrane being able to oscillate with respect to said turntable by means of fulcrum pivots which extend from said supporting plate and abut on an intermediate plate of said box-like container.

3. Phonographic reproduction apparatus according to the preceding claims, characterized in that said at least one selection pin is slidingly supported by a selection body which can rotate about an axis which substantially coincides with the axis of said turntable, means being provided on said selection body for the discrete positioning of said selection body with respect to said box-like container.

4. Phonographic reproduction apparatus according to one or more of the preceding claims, characterized in that it comprises, on said box-like container, a plurality of through holes which are circumferentially distributed around said turntable and can be selectively engaged by said at least one selection pin, said through holes being numerically equivalent to the grooves provided on said record.

5. Phonographic reproduction apparatus according to one or more of the preceding claims, characterized in that said at least one selection pin has a locking arm which is flanked by a guiding arm, said arms being slidingly accommodated in guiding bushes defined by said selection body, said locking arm being insertable in a hole of said plurality of through holes in order to removably engage said at least one actuator with its end, said locking arm having a locking tooth which is removably engageable with the inner edge of the corresponding through hole.

6. Phonographic reproduction apparatus according to one or more of the preceding claims, characterized in that said at least one actuator is constituted by a plurality of actuation pins which are slidingly accommodated in guiding holes defined by said intermediate plate at said through holes, said actuation pins engaging the supporting plate of said membrane.

7. Phonographic reproduction apparatus according to one or more of the preceding claims, characterized in that said supporting plate has a cam-like profile for obtaining an oscillating movement of the membrane which is always equidistant from said pickup arm regardless of the selected actuation pin.

8. Phonographic reproduction apparatus according to one or more of the preceding claims, characterized in that said at least one actuator is constituted by an actuation ring which is arranged around said turntable between said box-like container and said intermediate plate, said actuation ring being connected, by means of posts which pass through said intermediate plate, to an actuation pin which acts on said membrane in a substantially axial position with respect to said turntable.
